# EUROPEAN PATENT APPLICATION

(11) **EP 4 700 566 A1**
(43) Date of publication of application: **25.02.2026**
(21) Application number: 23938279.9
(22) Date of filing: 13.12.2023
(51) Int. Cl.: G06F 8/60, G06F 9/50

(54) **METHOD AND APPARATUS FOR APPLICATION DEPLOYMENT, AND RELATED DEVICE**

(30) Priority: 19.05.2023 CN 202310573141; 11.07.2023 CN 202310847475
(71) Applicant: Huawei Cloud Computing Technologies Co., Ltd., Guiyang, Guizhou 550025 (CN)
(72) Inventor: LIANG, Ming, Guiyang, Guizhou 550025 (CN); YE, Liangfeng, Guiyang, Guizhou 550025 (CN); YUE, Xiaoming, Guiyang, Guizhou 550025 (CN)
(74) Representative: Goddar, Heinz J.
(86) International application number: PCT/CN2023/138478
(87) International publication number: WO 2024/239612

(57) **Abstract**

This application provides an application deployment method, including: obtaining a configuration template provided by a user, where the configuration template includes a first configuration item and a second configuration item, and a value of the first configuration item is configured by the user; obtaining at least one available resource that matches the second configuration item and that is in a cloud environment; and determining a value of the second configuration item based on the at least one available resource, to deploy an application on a cloud based on the first configuration item, the value that is of the first configuration item and that is specified by the user, the second configuration item, and the value that is of the second configuration item and that is automatically determined by an application deployment apparatus. In this way, values of remaining configuration items that are not configured by the user are automatically determined based on a currently available resource in the cloud environment. This can effectively improve a success rate of application deployment, and the user does not need to rectify an application deployment exception in a repeated trial and error manner, thereby improving efficiency of deploying the application on the cloud by the user and reducing deployment difficulty. In addition, this application further provides a corresponding application deployment apparatus and a related device.

## Description

This application claims priorities to Chinese Patent Application No. 202310573141.1, filed with the China National Intellectual Property Administration on May 19, 2023 and entitled "APPLICATION DEPLOYMENT METHOD AND APPARATUS, AND RELATED DEVICE", and to Chinese Patent Application No. 202310847475.3, filed with the China National Intellectual Property Administration on July 11, 2023 and entitled "APPLICATION DEPLOYMENT METHOD AND APPARATUS, AND RELATED DEVICE", both of which are incorporated herein by reference in their entireties.

### TECHNICAL FIELD

This application relates to the field of cloud computing technologies, and in particular, to an application deployment method and apparatus, and a related device.

### BACKGROUND

An application orchestration service (application orchestration service, AOS) is a service for automatically deploying and orchestrating applications on a cloud platform, and can implement one-click application creation and cloud service resource activation on a cloud and provide efficient cloud application replication and migration capabilities.

Currently, in a process of deploying an application on the cloud, the application orchestration service provides a template for a user, and the user inputs values of a plurality of configuration items into the template, so that the application orchestration service can deploy the application on the cloud based on the values of the plurality of configuration items in the template.

However, in an actual application scenario, the application orchestration service often feeds back an application deployment failure to the user. In this case, the user needs to rectify a deployment exception in a repeated trial and error manner or the like. As a result, efficiency of deploying the application on the cloud by the user is reduced and deployment difficulty is increased.

### SUMMARY

In view of this, embodiments of this application provide an application deployment method, to improve efficiency of deploying an application on a cloud by a user and reduce deployment difficulty. This application further provides a corresponding application deployment apparatus, a computing device cluster, a computer-readable storage medium, and a computer program product.

According to a first aspect, an embodiment of this application provides an application deployment method. The method may be performed by a corresponding application deployment apparatus. Specifically, the application deployment apparatus obtains a configuration template provided by a user, where the configuration template may be a configuration template customized by the user, or may be a configuration template obtained by completing configuration by the user for some configuration items in a configuration template provided by the application deployment apparatus, and the configuration template includes a plurality of configuration items for an application. The plurality of configuration items include a first configuration item and a second configuration item, a value of the first configuration item is configured by the user, a value of the second configuration item is not configured by the user, and the plurality of configuration items are used to configure a resource that is in a cloud environment and that is required for deploying the application. Then, the application deployment apparatus obtains at least one available resource that matches the second configuration item and that is in the cloud environment, where the available resource includes at least one of a computing resource, a storage resource, and a network resource; and determines the value of the second configuration item based on the at least one available resource, where the determined value of the second configuration item indicates a target resource in the at least one available resource. In this way, the application deployment apparatus deploys the application on a cloud based on the first configuration item, the value that is of the first configuration item and that is specified by the user, the second configuration item, and the value that is of the second configuration item and that is automatically determined by the application deployment apparatus.

In this way, the application deployment apparatus automatically determines, based on a currently available resource in the cloud environment, values of remaining configuration items that are not configured by the user, so that when the application is deployed based on the values of the part of configuration items, an application deployment failure caused by unavailability of resources corresponding to the values of the part of configuration items can be avoided. This can effectively improve a success rate of application deployment, and the user does not need to rectify an exception in an application deployment process in a repeated trial and error manner, thereby improving efficiency of deploying the application on the cloud by the user and reducing deployment difficulty. In addition, that the application deployment apparatus automatically determines the values of the part of configuration items that are not configured by the user can also effectively reduce a quantity of parameters that need to be configured by the user. This further improves efficiency of deploying the application on the cloud by the user and reducing deployment difficulty.

In a possible implementation, the application deployment apparatus may further obtain deployment indication information, where the deployment indication information indicates to select an available resource from the cloud environment for the second configuration item based on a target factor (that is, indicates a preference of the user for selecting a resource for the second configuration item), and the target factor includes one or more factors in a function, performance, and costs of the application. In this case, when determining the value of the second configuration item, the application deployment apparatus may specifically determine the value of the second configuration item based on the deployment indication information and the at least one available resource. In this way, the application processing apparatus selects, based on the deployment indication information, an appropriate available resource for the application that needs to be deployed (that is, determines the value of the second configuration item), so that the available resource allocated to the application can better meet an expectation of the user. For example, a low-cost/high-performance resource that meets an expectation of the user may be selected for application deployment. This improves user experience.

In a possible implementation, when determining the value of the second configuration item, the application deployment apparatus may specifically first obtain scores respectively corresponding to a plurality of candidate values of the second configuration item, where each of the plurality of candidate values indicates an available resource in the cloud environment; and then determine the value of the second configuration item based on the scores respectively corresponding to the plurality of candidate values. In this way, the application deployment apparatus may automatically determine an appropriate value for the second configuration item based on a scoring mechanism, that is, automatically select an appropriate resource from the cloud environment for application deployment.

In a possible implementation, there are a plurality of second configuration items, and each second configuration item corresponds to at least one candidate value. In this case, when determining the value of the second configuration item, the application deployment apparatus may specifically first determine a plurality of configuration combinations, where each of the plurality of configuration combinations includes the plurality of second configuration items and one candidate value corresponding to each of the plurality of second configuration items, and candidate values respectively corresponding to the plurality of second configuration items vary in different configuration combinations. Then, the application deployment apparatus determines a score of each of the plurality of configuration combinations, where the score of each configuration combination is obtained through calculation based on scores of candidate values respectively corresponding to the plurality of second configuration items; and determines a target configuration combination from the plurality of configuration combinations based on the score of each configuration combination, where candidate values in the target configuration combination are values of the plurality of second configuration items. In this way, the values of the plurality of second configuration items are determined in a configuration combination manner. This may prevent final application deployment effect from being affected due to a conflict between values set for the plurality of second configuration items caused by ignoring a dependency relationship between configuration items.

In a possible implementation, the plurality of candidate values of the second configuration item include a target candidate value, a score of the target candidate value is a sum value of a basic score and a preference score, and the preference score is determined based on a preference level of the target candidate value. In this case, the application deployment apparatus may further adjust the score of the target candidate value in response to an adjustment operation (for example, of an administrator) on the preference level of the target candidate value. In this way, a preference level of a candidate value is adjusted, so that a score of the candidate value in a resource configuration process may be adjusted, to facilitate fine-granularity management and control over an available resource in the cloud environment. For example, a preference level of a candidate value corresponding to an available resource in some AZs may be adjusted, so that a score of the candidate value may be increased. In this way, the available resource in the AZs may be preferentially allocated to the application that needs to be deployed, to implement resource management in the cloud environment.

In a possible implementation, when deploying the application on the cloud, the application deployment apparatus may specifically first output the value that is of the second configuration item and that is for presentation to the user, and determine, in response to a modification operation of the user on the value of the second configuration item, a modified value corresponding to the second configuration item, so that the application deployment apparatus deploys the application on the cloud based on the first configuration item, the value that is of the first configuration item and that is specified by the user, the second configuration item, and the modified value that corresponds to the second configuration item and that is modified by the user. In this way, that the user modifies (or confirms) the value of the second configuration item can simplify an operation that needs to be performed by the user when deploying the application, improve configuration efficiency, and reduce configuration difficulty, and can also make a final configuration for the application further meet an expectation of the user, to improve user experience of deploying the application.

In a possible implementation, when deploying the application on the cloud, the application deployment apparatus may specifically first output a value that is of the second configuration item and that is for presentation to the user, and a historical configuration record corresponding to the configuration template, where the historical configuration record includes a value configured for the second configuration item when an application is deployed in a historical time period, so that the application deployment apparatus may deploy the application on the cloud based on the first configuration item, the value of the first configuration item, the second configuration item, and the value of the second configuration item in response to a selection operation of the user on the value of the second configuration item. In this way, the historical configuration record for the second configuration item is presented to the user, to provide a reference for the user to configure an application, so that the user can make a decision by referring to a configuration situation of another user for the second configuration item, and set an appropriate value for the second configuration item. This can improve user experience of deploying the application.

According to a second aspect, this application provides an application deployment apparatus. The application deployment apparatus includes: an application orchestration module, configured to obtain a configuration template provided by a user, where the configuration template includes a plurality of configuration items for an application, the plurality of configuration items includes a first configuration item and a second configuration item, a value of the first configuration item is configured by the user, and the plurality of configuration items are used to configure a resource that is in a cloud environment and that is required for deploying the application; a cloud environment feedback module, configured to obtain at least one available resource that matches the second configuration item and that is in the cloud environment, where the available resource includes at least one of a computing resource, a storage resource, and a network resource; and a configuration module, configured to determine a value of the second configuration item based on the at least one available resource, where the value of the second configuration item indicates a target resource in the at least one available resource; and the application orchestration module is further configured to deploy the application on a cloud based on the first configuration item, the value of the first configuration item, the second configuration item, and the value of the second configuration item.

In a possible implementation, the application orchestration module is further configured to obtain deployment indication information, where the deployment indication information indicates to select an available resource from the cloud environment for the second configuration item based on a target factor, and the target factor includes one or more factors in a function, performance, and costs of the application; and the configuration module is specifically configured to determine the value of the second configuration item based on the deployment indication information and the at least one available resource.

In a possible implementation, the configuration module is specifically configured to: obtain scores respectively corresponding to a plurality of candidate values of the second configuration item, where each of the plurality of candidate values indicates an available resource in the cloud environment; and determine the value of the second configuration item based on the scores respectively corresponding to the plurality of candidate values.

In a possible implementation, there are a plurality of second configuration items, each second configuration item corresponds to at least one candidate value, and the configuration module is specifically configured to: determine a plurality of configuration combinations, where each of the plurality of configuration combinations includes the plurality of second configuration items and one candidate value corresponding to each of the plurality of second configuration items, and candidate values respectively corresponding to the plurality of second configuration items vary in different configuration combinations; determine a score of each of the plurality of configuration combinations, where the score of each configuration combination is obtained through calculation based on scores of candidate values respectively corresponding to the plurality of second configuration items; and determine a target configuration combination from the plurality of configuration combinations based on the score of each configuration combination, where candidate values in the target configuration combination are values of the plurality of second configuration items.

In a possible implementation, the plurality of candidate values include a target candidate value, a score of the target candidate value is a sum value of a basic score and a preference score, and the preference score is determined based on a preference level of the target candidate value; and the configuration module is further configured to: in response to an adjustment operation on the preference level of the target candidate value, adjust the score of the target candidate value.

In a possible implementation, the application orchestration module is specifically configured to: output the value that is of the second configuration item and that is for presentation to the user; in response to a modification operation of the user on the value of the second configuration item, determine a modified value corresponding to the second configuration item; and deploy the application on the cloud based on the first configuration item, the value of the first configuration item, the second configuration item, and the modified value corresponding to the second configuration item.

In a possible implementation, the application orchestration module is specifically configured to: output the value that is of the second configuration item and that is for presentation to the user, and a historical configuration record corresponding to the configuration template, where the historical configuration record includes a value configured for the second configuration item when an application is deployed in a historical time period; and in response to a selection operation of the user on the value of the second configuration item, deploy the application on the cloud based on the first configuration item, the value of the first configuration item, the second configuration item, and the value of the second configuration item.

It should be noted that the application deployment apparatus provided in the second aspect corresponds to the application deployment method provided in the first aspect. Therefore, for technical effects of the second aspect and any one of the implementations of the second aspect, refer to technical effects of the first aspect or a corresponding implementation of the first aspect.

According to a third aspect, this application provides a computing device cluster. The computing device includes at least one computing device. The at least one computing device includes at least one processor and at least one memory. The at least one memory is configured to store instructions. The at least one processor executes the instructions stored in the at least one memory, so that the computing device cluster performs the application deployment method according to any one of the first aspect or the possible implementations of the first aspect. It should be noted that the memory may be integrated into the processor, or may be independent of the processor. The at least one computing device may further include a bus. The processor is connected to the memory through the bus. The memory may include a readable memory and a random access memory.

According to a fourth aspect, this application provides a computer-readable storage medium. The computer-readable storage medium stores instructions. When the instructions are run on at least one computing device, the at least one computing device is enabled to perform the method according to any one of the first aspect or the implementations of the first aspect.

According to a fifth aspect, this application provides a computer program product including instructions. When the computer program product is run on at least one computing device, the at least one computing device is enabled to perform the method according to any one of the first aspect or the implementations of the first aspect.

In this application, based on implementations provided in the foregoing aspects, the implementations may be further combined to provide more implementations.

### BRIEF DESCRIPTION OF DRAWINGS

To describe technical solutions in embodiments of this application more clearly, the following briefly describes accompanying drawings used in describing embodiments. It is clear that the accompanying drawings in the following descriptions show merely some embodiments of this application, and a person of ordinary skill in the art may still derive other drawings from these accompanying drawings.
FIG. 1 is a diagram of a structure of an example application deployment system according to this application;
FIG. 2 is a schematic flowchart of an application deployment method according to this application;
FIG. 3 is a diagram of an example interaction interface 1 according to this application;
FIG. 4 is a diagram of another example interaction interface 2 according to this application;
FIG. 5 is a diagram of a structure of a computing device according to this application; and
FIG. 6 is a diagram of a structure of a computing device cluster according to this application.

### DESCRIPTION OF EMBODIMENTS

The following describes the solutions in embodiments provided in this application with reference to the accompanying drawings in this application.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner for describing objects with a same attribute in embodiments of this application.

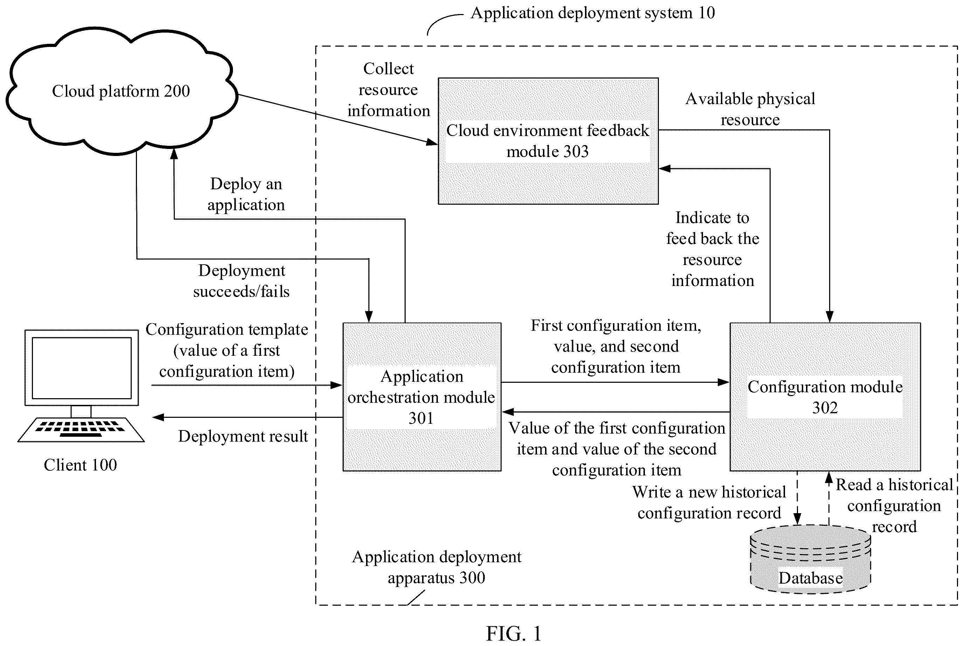

FIG. 1 is a diagram of a structure of an example application deployment system according to this application. As shown in FIG. 1, the application deployment system 10 includes a client 100, a cloud platform 200, and an application deployment apparatus 300. The client 100, the cloud platform 200, and the application deployment apparatus 300 may communicate with each other through a network.

The client 100 may be an application run on a user-side device, or may be a network browser provided by the application deployment system 10 for the outside, or the like. FIG. 1 shows only one client included in the application deployment system 10. During actual application, the application deployment system 10 may include any quantity of clients. This is not limited herein.

The cloud platform 200 is a platform that provides computing, network, and storage capabilities based on services of a hardware resource and a software resource. One or more applications may be deployed on the cloud platform 200, and the application can provide a corresponding cloud service during running, for example, an elastic cloud server (Elastic Cloud Server, ECS) or a cloud storage service.

The application deployment apparatus 300 includes an application orchestration module 301, a configuration module 302, and a cloud environment feedback module 303, to provide convenience for a user to deploy an application on the cloud platform 200. During actual application, the application deployment apparatus 300 may be deployed on a cloud, and is configured to provide a cloud service for the user to deploy an application.

Usually, the application deployment apparatus 300 may provide a configuration template for the user via the client 100. The configuration template may be a text description file in a YAML format or a JSON format, and may define a plurality of configuration items required for deploying an application. The plurality of configuration items are used to configure a resource that is in a cloud environment and that is required for deploying the application, for example, configure a region (region) and an availability zone (availability zone, AZ) in which the application is located, and a specification of a processor and a memory specification that support application running. The user inputs, on the client 100, a value of each configuration item in the configuration template, so that the application deployment apparatus 300 may deploy a corresponding application on the cloud platform 200 based on the value of each configuration item in the configuration template.

However, resource usage in the cloud environment is in a dynamic change state. Therefore, in a process of deploying an application, a quantity/specification that is of a resource and that is indicated by values that are of some configuration items and that are input by the user into the configuration template may not meet a resource requirement of the application when the application is run. Consequently, the application fails to be deployed on the cloud platform 200. For example, the user configures, in the configuration template, a resource of a specification of 4U8G (namely, four processors and 8G memory) in an AZ 1 for the application. In an actual application scenario, a quantity of processors that are not allocated in a remaining computing resource in the AZ 1 may be less than 4, or a size of a memory resource that is not allocated may be less than 8G. As a result, a remaining available computing resource in the AZ 1 cannot meet a resource requirement during application deployment, and consequently, the application fails to be deployed. In this case, the user usually modifies a value of a corresponding configuration item in the configuration template in a trial and error manner, and attempts to request, based on a modified configuration template, the application deployment apparatus 300 to deploy the application again. In this way, the user rectifies a deployment exception in a repeated trial and error manner. This leads to low efficiency of deploying the application on the cloud platform 200 and high deployment difficulty.

In view of this, this application provides an application deployment method. The application deployment apparatus 300 automatically sets appropriate values for some configuration items, to improve application deployment efficiency and reduce application deployment difficulty. During specific implementation, the user may input corresponding values on the client 100 for some configuration items in the configuration template, for example, configure a specification of a computing resource required for supporting application running, and may not configure a region or an AZ in which the application is located. Then, the application orchestration module 301 may obtain the configuration template provided by the client 100, traverse the configuration template, determine the remaining configuration items that are not configured by the user, and provide, for the configuration module 302, the remaining configuration items that are not configured by the user. After that, the configuration module 302 may indicate the cloud environment feedback module 303 to collect one or more available resources that are in the cloud environment and that match the configuration item that is not configured by the user, where the resource includes at least one of a computing resource, a storage resource, and a network resource; determine values of the part of configuration items based on the one or more available resources; and feed back the values to the application orchestration module 301. In this way, the application orchestration module 301 may deploy the application on the cloud based on the values defined by the user in the configuration template for some configuration items and the values that are of the remaining configuration items and that are fed back by the configuration module 302, which may be specifically deploying the application on the cloud platform 200.

In this way, the application deployment apparatus 300 automatically determines, based on a currently available resource in the cloud environment, the values of the remaining configuration items that are not configured by the user, so that when the application is deployed based on the values of the part of configuration items, an application deployment failure caused by unavailability of resources corresponding to the values of the part of configuration items (for example, the resources have been allocated to another application) can be avoided. This can effectively improve a success rate of application deployment, and the user does not need to rectify a deployment exception in a repeated trial and error manner, thereby improving efficiency of deploying the application on the cloud by the user and reducing deployment difficulty. In addition, that the application deployment apparatus 300 automatically determines the values of the part of configuration items that are not configured by the user can also effectively reduce a quantity of parameters that need to be configured by the user. This further improves efficiency of deploying the application on the cloud by the user and reducing deployment difficulty.

It should be noted that the application deployment system 10 shown in FIG. 1 is merely used as an example for description. During actual application, the application deployment system 10 may alternatively have another possible structure. For example, in another possible implementation, the application deployment system 10 may include a plurality of clients and a plurality of cloud platforms. For example, the application deployment apparatus 300 may support the user in deploying applications on the plurality of cloud platforms. In addition, division of function modules in the application deployment apparatus 300 in FIG. 1 is not limited to the example shown in FIG. 1. In another possible implementation, the configuration module 302 may alternatively be divided into a scoring module and an association configuration module. The scoring module is configured to determine scores of a plurality of optional values of a second configuration item, and the association configuration module is configured to determine a unique value from the plurality of optional values as a value of the second configuration item. This is not limited herein.

For example, the application deployment apparatus 300 in FIG. 1 may be implemented by using software, or may be implemented by using hardware.

In an example in which the application deployment apparatus 300 is a software function unit, the application deployment apparatus 300 may include code that is run on a computing instance. The computing instance may include at least one of a host, a virtual machine, and a container. Further, there may be one or more computing instances. For example, the application deployment apparatus 300 may include code run on a plurality of hosts/virtual machines/containers. It should be noted that the plurality of hosts/virtual machines/containers configured to run the code may be distributed in a same region, or may be distributed in different regions. Further, the plurality of hosts/virtual machines/containers configured to run the code may be distributed in a same AZ, or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is arranged in one region. For cross-region communication between two VPCs in a same region and between VPCs in different regions, a communication gateway needs to be arranged in each of the VPCs, and interconnection between the VPCs is implemented through the communication gateway.

The application deployment apparatus 300 is used as an example of a hardware function unit, and the application deployment apparatus 300 may include at least one computing device, for example, a server. Alternatively, the application deployment apparatus 300 may be implemented by using a device including an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), a data processing unit (Data processing unit, DPU), or any combination thereof.

The following describes various non-limiting specific implementations of an application deployment process in detail.

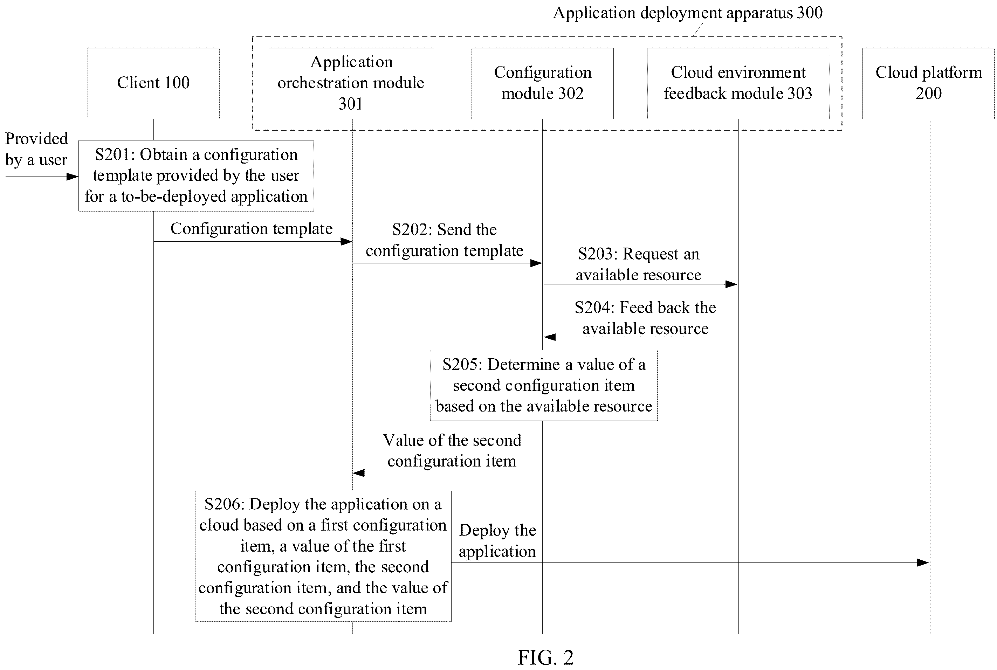

FIG. 2 is a schematic flowchart of an application deployment method according to an embodiment of this application. The method may be applied to the application deployment system 10 shown in FIG. 1, or may be applied to another applicable application deployment system. The following uses an example in which the method is applied to the application deployment system 10 shown in FIG. 1 for description.

The application deployment method shown in FIG. 2 may specifically include the following steps.

S201: A client 100 obtains a configuration template provided by a user, where the configuration template includes a plurality of configuration items for an application, the plurality of configuration items include a first configuration item and a second configuration item, a value of the first configuration item is configured by the user, and the plurality of configuration items in the configuration template are used to configure a resource that is in a cloud environment and that is required for deploying the application.

When the user needs to deploy the application on a cloud platform 200, the user may provide related configuration for the application, which may be specifically configuring information such as the resource required for deploying the application.

In an implementation example, an application deployment apparatus 300 may provide a configuration template for the client 100, and a plurality of configuration items are defined in the configuration template. In this case, the client 100 may present a configuration interface to the user based on the configuration template. A plurality of configuration items are displayed in the configuration interface, so that the user may input, on the configuration interface according to a requirement of a to-be-deployed application, values of some configuration items, for example, specify a quantity of processors, a memory size, and a used database that are required when the application is run. For the remaining configuration items, the user may not set values of the part of configuration items, for example, the user may not specify a region or an AZ in which the application is located. For ease of description and differentiation, the configuration item whose value is set by the user is referred to as a first configuration item, and the configuration item whose value is not set by the user is referred to as a second configuration item. There may be one or more first configuration items and one or more second configuration items. Then, the client 100 may add, to the configuration template, the value input by the user for the first configuration item, and send the configuration template that includes the value of the first configuration item to an application orchestration module 301.

In another implementation example, the user may customize a configuration template on the client 100. The customized configuration template includes a plurality of configuration items. A value is set for a first configuration item in the plurality of configuration items. No value is set for a second configuration item in the plurality of configuration items. Then, the client 100 may send, to an application orchestration module 301, the configuration template that is defined by the user and that includes the value of the first configuration item.

In this embodiment, for the second configuration item that is not configured by the user, the application deployment apparatus 300 may automatically set an appropriate value for the second configuration item. In an actual application scenario, there may be a large quantity of available resources of some types in the cloud environment. Correspondingly, there may be a plurality of values of the second configuration item. For example, the second configuration item may include a configuration item of a computing specification. In this case, the values of the second configuration item may be a processor 1 to a processor 4 in an AZ 1 (a size of memory space in this computing specification is fixed, for example, a size of 8G, which is not described in detail herein), may be a processor 5 to a processor 8 in an AZ 2, or may be a processor 3 to a processor 6 in an AZ 3.

Therefore, in a further possible implementation, the user may further input deployment indication information into the client 100. The deployment indication information indicates a preference of the user for selecting a resource for the second configuration item, for example, preferentially selecting a resource with lower costs from a cost perspective, preferentially selecting a resource with higher performance from a performance perspective, or preferentially selecting a resource with higher performance from a function perspective. During specific implementation, the deployment indication information indicates the application deployment apparatus 300 to select an available resource from the cloud environment for the second configuration item based on a target factor. The target factor may be, for example, one or more factors in a function, performance, and costs of the to-be-deployed application, or may be another type of factor, to facilitate the application deployment apparatus 300 in subsequently selecting, for application deployment, an appropriate available resource for the second configuration item by using the deployment indication information. Correspondingly, the client 100 may send the deployment indication information and the configuration template together to the application orchestration module 301.

S202: The application orchestration module 301 sends, to a configuration module 302, the configuration template provided by the user.

During specific implementation, the application orchestration module 301 may parse the received configuration template, determine the first configuration item and the value of the first configuration item, and determine the second configuration item that is not configured, for example, determine a configuration item whose value is null as the second configuration item. In an actual application scenario, a dependency relationship may exist between different configuration items. For example, a configuration item 1 is used to configure an AZ in which an application is located, and a configuration item 2 is used to configure a quantity of processors required for supporting application running. In this case, when a processor is configured for the application, the corresponding quantity of processors need to be configured for the application in the AZ indicated by a value of the configuration item 1. Therefore, the application orchestration module 301 may send the first configuration item, the value of the first configuration item, and the second configuration item to the configuration module 302, to request the configuration module 302 to set a corresponding value for the second configuration item.

Further, when the application orchestration module 301 receives the deployment indication information sent by the client 100, the application orchestration module 301 may further send the deployment indication information to the configuration module 302, so that the configuration module 302 sets the corresponding value for the second configuration item based on the deployment indication information.

S203: The configuration module 302 requests, from a cloud environment feedback module 303, at least one available resource that matches the second configuration item and that is in the cloud environment.

In this embodiment, the available resource is a resource that is in the cloud environment and that can be allocated to an application that needs to be deployed, and the resource may be one or more of a computing resource, a storage resource, and a network resource.

For example, the computing resource may be a resource with computing power, for example, a central processing unit (central processing unit, CPU), a data processing unit (data processing unit, DPU), or an infrastructure processing unit (infrastructure processing unit, IPU).

The storage resource may be a resource that has a storage capability, for example, a cache, a memory, or a storage device.

The network resource may be, for example, a network transmission resource, for example, an uplink bandwidth, a downlink bandwidth, or a network adapter type.

S204: The cloud environment feedback module 303 feeds back, to the configuration module 302, the at least one available resource that matches the second configuration item.

In this embodiment, the application deployment apparatus 300 may automatically set a value for the second configuration item based on a currently available resource in the cloud environment, to avoid a subsequent application deployment failure caused by unavailability of a resource that is in the cloud environment and that is indicated by the value set for the second configuration item.

For example, the value of the second configuration item may be specifically an identifier of the available resource that matches the second configuration item (for example, an ID of the resource). For example, the second configuration item is used to configure one processor required for deploying an application. It is assumed that the cloud environment includes three processors: a processor 1, a processor 2, and a processor 3, and the processor 2 and the processor 3 are in an idle state. In this case, the available resource that matches the second configuration item is the processor 2 or the processor 3, and the value of the second configuration item may be an identifier of the processor 2, or may be an identifier of the processor 3.

In a possible implementation, the configuration module 302 may generate a request including the first configuration item, the value of the first configuration item, and the second configuration item, and send the request to the cloud environment feedback module 303 to request the available resource that matches the second configuration item and that is in the cloud environment. The cloud environment feedback module 303 may respond to the request, invoke a query interface based on received information about the configuration item, to query available resources in the cloud environment, for example, query information such as a margin of the available resources, a network delay, and costs, and obtain, through screening, the available resource that matches the second configuration item from the available resources. During actual application, for a part of resources that cannot be accessed through the query interface, for example, an access address of a cloud service, a skilled person may manually enter the part of available resources, and provide the available resources for the cloud environment feedback module 303.

There may be one or more available resources obtained by the cloud environment feedback module 303 through screening, and there may be one or more values corresponding to the second configuration item. For example, when the available resource that matches the second configuration item is a processor 2 or a processor 3, the value of the second configuration item may be an identifier of the processor 2, or may be an identifier of the processor 3. In this embodiment, the cloud environment feedback module 303 may feed back information about various available resources corresponding to the second configuration item to the configuration module 302, so that the configuration module 302 determines the value of the second configuration item based on one of the available resources. For ease of description, the value that may be set for the second configuration item is referred to as a candidate value in the following.

In addition, there may be a plurality of configuration items that are not configured by the user, and correspondingly, there may be a plurality of second configuration items. In this case, the available resource that is obtained by the cloud environment feedback module 303 through screening and that matches the second configuration item may be specifically at least one available resource that separately matches each second configuration item, and there may be one or more candidate values corresponding to each second configuration item.

During actual application, the application deployment apparatus 300 may be configured with one or more plug-ins, so that the cloud environment feedback module 303 may collect an available resource in the cloud environment by using the plug-in. For example, when the application deployment apparatus 300 is configured with a plurality of plug-ins, different plug-ins may collect different types of available resources in the cloud environment. In this way, when an available resource of a newly added type in the cloud environment needs to be collected, a new plug-in may be deployed on the application deployment apparatus 300, to collect the available resource of the newly added type.

S205: The configuration module 302 determines the value of the second configuration item based on the at least one available resource that matches the second configuration item, and provides the value of the second configuration item for the application orchestration module 301, where the value of the second configuration item indicates a target resource in the at least one available resource.

The configuration module 302 may select one of the at least one available resource as the target resource from the at least one available resource, and set the value of the second configuration item based on the selected target resource.

In this embodiment, the following several implementation examples of determining the value of the second configuration item are provided.

In a first implementation example, when a plurality of available resources match the second configuration item, there may be a plurality of candidate values corresponding to the plurality of available resources. In this case, the configuration module 302 may randomly select one candidate value from the plurality of candidate values as the value of the second configuration item; or the configuration module may select one candidate value from the plurality of candidate values as the value of the second configuration item based on load balancing or another strategy. When there is only one available resource that matches the second configuration item, the second configuration item corresponds to one candidate value, and the configuration module 302 may directly determine the candidate value as the value of the second configuration item.

In a second implementation example, the configuration module 302 may determine the value of the second configuration item in a scoring manner.

During specific implementation, the configuration module 302 first scores a candidate value corresponding to each available resource. For example, for each available resource, the configuration module 302 may calculate a score of a candidate value corresponding to the available resource in a function dimension, a score of the candidate value in a performance dimension, and a score of the candidate value in a cost dimension, where the scores are a score 1, a score 2, and a score 3 in sequence. Then, the configuration module 302 compares the score 1, the score 2, and the score 3, and determines a maximum score (assuming that the maximum score is the score 2). In this case, the configuration module 302 may determine the maximum score as a score of the candidate value (that is, the score of the candidate value is the score 2). Alternatively, the configuration module 302 may preferentially select a score of the candidate value in a function dimension based on a priority of "function>performance>cost", and determine the score of the candidate value in a function dimension as a score of the candidate value.

The score of the candidate value corresponding to the available resource in a function dimension may be obtained by the skilled person by manually annotating the available resource in advance, so that the configuration module 302 obtains the score of the candidate value in a function dimension by reading a manual annotation result. For example, elastic load balance (elastic load balance, ELB) can be classified into exclusive and shared elastic load balance in terms of functions. The two types of elastic load balance have same basic functions, but the exclusive elastic load balance is better than the shared elastic load balance in terms of reliability and protocol support ranges. Therefore, the skilled person can annotate that a score of the exclusive elastic load balance is higher than a score of the shared elastic load balance in a function dimension.

The score of the candidate value in a performance dimension may be determined by the configuration module 302 based on performance of the available resource. Usually, performance of the available resource is positively correlated with the score of the candidate value in a performance dimension. For example, computing resources can be classified into "general-purpose", "general-purpose computing enhanced", and "high-performance computing" types based on performance. The "general-purpose type" of computing resource has lowest performance and a lowest score. The "high-performance computing type" of computing resource has highest performance and a highest score.

Similarly, the score of the candidate value in a cost dimension may be determined by the configuration module 302 based on costs of the available resource, and the costs of the available resource is negatively correlated with the score of the candidate value in a cost dimension.

Further, a maximum score determined by the configuration module 302 from the score in a function dimension, the score in a performance dimension, and the score in a cost dimension may be used as a basic score of the candidate value. The candidate value may further have a preference score. The preference score is determined based on a preference level of the candidate value. A preference level of each candidate value may be set by the skilled person, or may be set by the configuration module 302. Determining a score of a candidate value (referred to as a target candidate value below) of the second configuration item is used as an example. The configuration module 302 may select a score in one of function, performance, and cost dimensions as a basic score of the target candidate value in the foregoing manner, determine a preference level of the target candidate value, and determine a preference score based on the preference level. For example, the preference level may include three levels: "recommended", "recommended+", and "recommended++", and preference scores corresponding to the three levels are 5, 10, and 15 points respectively. Then, the configuration module 302 may calculate a sum value of the basic score and the preference score, and use the sum value as the score of the target candidate value.

During actual application, the configuration module 302 may include a score management file, where a basic score and a preference level of one or more candidate values are recorded in the score management file. For example, content recorded in the score management file may be shown in Table 1.

**Table 1**

| | | | | |
|---|---|---|---|---|
| Cloud resource | Configuration item | Value | Basic score | Preference level |

The cloud resource is a resource that is on a cloud and to which the configuration item belongs, for example, may be a cloud computing resource, for example, an elastic cloud server (Elastic Cloud Server, ECS for short) or a cloud container engine (cloud container engine, CCE). If the configuration item does not belong to a cloud resource, for example, the configuration item is an access address of a cloud service, a universal identifier may be filled in the cloud resource, for example, "global".

Score content of values of a plurality of configuration items may be recorded in the score management file, so that after determining a candidate value of a configuration item based on a received available resource, the configuration module 302 may determine, by searching the score management file, a basic score and a preference score that correspond to the candidate value, and then calculate a final score corresponding to the candidate value. For example, it is assumed that a preference level corresponding to an original target candidate value is originally "recommended", and a preference score corresponding to the candidate value is 5 points. In this case, the skilled person may perform an adjustment operation on the preference level corresponding to the target candidate value, which is specifically adjusting the preference level to "recommendation++", so that the preference score corresponding to the candidate value is correspondingly adjusted to 15. In this way, a final score of the target candidate value is further increased by 10 points (that is, 15 points-5 points) based on an original score.

During actual application, the skilled person may further modify a preference level that is of a (candidate) value of a configuration item and that is recorded in the score management file, to adjust a preference score corresponding to the value, thereby implementing modification of a final score corresponding to the value.

In addition, when the configuration module 302 receives the deployment indication information (indicating a preference of the user for selecting a resource for the second configuration item) sent by the application orchestration module 301, the configuration module 302 may further determine, with reference to the deployment indication information, a score of a candidate value corresponding to each available resource.

Specifically, the configuration module 302 may determine, based on the deployment indication information, to select an available resource from the cloud environment for the second configuration item based on a target factor, where the target factor may be one or more factors in a function, performance, or costs of a to-be-deployed application. In this way, the configuration module 302 may select, based on the target factor from a score of a candidate value in a function dimension, a score of the candidate value in a performance dimension, and a score of the candidate value in a cost dimension, a score of a dimension that matches the target factor. For example, when the target factor is specifically a factor in a function dimension, the configuration module 302 may use the score of the candidate value in a function dimension as a score of the candidate value. Alternatively, when the target factor includes a factor in a performance dimension and a factor in a cost dimension, the configuration module 302 may compare the score of the candidate value in a performance dimension with the score of the candidate value in a cost dimension, and use a score with a larger score as a score of the candidate value.

After determining a score of each candidate value of the second configuration item, the configuration module 302 may select a candidate value with a maximum score from the plurality of candidate values, and determine the candidate value as the value of the second configuration item. When scores of the plurality of candidate values are the same, the configuration module 302 may randomly select one candidate value from the plurality of candidate values as the value of the second configuration item. Alternatively, the configuration module 302 may select, from the plurality of candidate values based on scores in another dimension, a candidate value with a maximum score in the another dimension as the value of the second configuration item. For example, it is assumed that the configuration module 302 determines, based on the deployment indication information, a score of each candidate value in a function dimension as a score of the candidate value. In this case, when scores of the plurality of candidate values are the same, the configuration module 302 may further compare scores of the plurality of candidate values in a function dimension based on a priority of "function>performance>cost", determine, from the plurality of candidate values, a candidate value with a maximum score in a function dimension, and determine the candidate value as the value of the second configuration item. If the plurality of candidate values still have a same score in a function dimension, the configuration module 302 may continue to compare scores of the plurality of candidate values in a cost dimension, and determine a candidate value with a maximum score in a cost dimension in the plurality of candidate values as the value of the second configuration item.

Alternatively, there may be a plurality of second configuration items, and a dependency relationship may exist between different second configuration items. In this case, after obtaining a score of each candidate value, the configuration module 302 may further determine a plurality of configuration combinations, for example, determine a plurality of configuration combinations based on the dependency relationship between different second configuration items, where each configuration combination includes a plurality of same second configuration items, each second configuration item in each configuration combination corresponds to one candidate value, and candidate values respectively corresponding to the plurality of second configuration items vary in different configuration combinations. Then, the configuration module 302 may calculate a score for each configuration combination. For example, the configuration module 302 may calculate a sum of scores of candidate values of all second configuration items in a configuration combination, and use, as a score of the configuration combination, a sum value obtained through calculation. Alternatively, the configuration module 302 may perform weighted summation on a score of one candidate value corresponding to each second configuration item in a configuration combination, where weights corresponding to different second configuration items are different; and use, as a score of the configuration combination, a sum value obtained through weighted summation. Finally, the configuration module 302 may determine a configuration combination with a highest score based on scores of the configuration combinations, to determine candidate values of second configuration items in the configuration combination as values of the second configuration items.

This may prevent final application deployment effect from being affected due to a conflict between values set for the plurality of second configuration items caused by ignoring a dependency relationship between configuration items. In addition, when the score of the configuration combination is calculated through weighted summation, different weights are set for different configuration items, so that a management granularity for the configuration items can be improved, and a better configuration recommendation can be provided for the user. This improves overall configuration effect for a to-be-deployed application. For example, when the user indicates to preferentially select an available resource with low costs from a cost perspective, a weight value of a configuration item for an AZ is set to a low value, and a weight value of a computing resource specification is set to a high value, so that a configuration for an application can finally select a computing resource with a good specification condition, instead of selecting a computing resource with a poor specification condition due to setting the weight value of the configuration item for the AZ to an excessively high value.

During actual application, the configuration module 302 may maintain a configuration item weight file, for example, a configuration item weight table, where the configuration item weight file is used to record a weight corresponding to each configuration item. For example, a weight value corresponding to each configuration item may be recorded in the configuration item weight file based on a format shown in Table 2.

**Table 2**

| | | |
|---|---|---|
| Cloud resource | Configuration item | Weight |

In this way, when calculating a score of each configuration combination, the configuration module 302 may perform weighted summation on scores of a plurality of second configuration items in each configuration combination based on the weight that is of each configuration item and that is recorded in the configuration item weight file, to obtain the score of each configuration combination through calculation.

It should be noted that a specific implementation of determining a value of one or more second configuration items is merely used as some examples for description. In another possible implementation, the configuration module 302 may alternatively determine the value of the second configuration item in another manner. For example, the configuration module 302 may determine the value of the second configuration item by combining or changing the foregoing implementations. This is not limited herein.

After determining the value of the second configuration item, the configuration module 302 may send the value of the second configuration item to the application orchestration module 301.

S206: The application orchestration module 301 deploys the application on a cloud based on the first configuration item, the value of the first configuration item, the second configuration item, and the value of the second configuration item.

In this embodiment, the following several specific implementation examples of deploying the application on the cloud are provided.

In a first implementation, the application orchestration module 301 deploys the application on the cloud based on the value configured by the user for the first configuration item and the value automatically configured by the configuration module 302 for the second configuration item, which may be specifically allocating, to the application, an available resource that is in the cloud environment and that is indicated by the value of the first configuration item and the value of the second configuration item, to facilitate supporting successful running of the application based on the available resource, thereby implementing deployment of the application on the cloud.

In this way, the user needs to provide only some configuration parameters, and the application deployment apparatus 300 can automatically supplement other configuration parameters, so that a quantity of parameters that need to be configured by the user in an application deployment process can be reduced. This improves efficiency of deploying the application on the cloud by the user and reducing deployment difficulty. In addition, the resource that is in the cloud environment and that is indicated by the value of the second configuration item is available. This avoids a problem that application deployment fails because the resource is unavailable, further improves application deployment efficiency, and reduce application deployment difficulty.

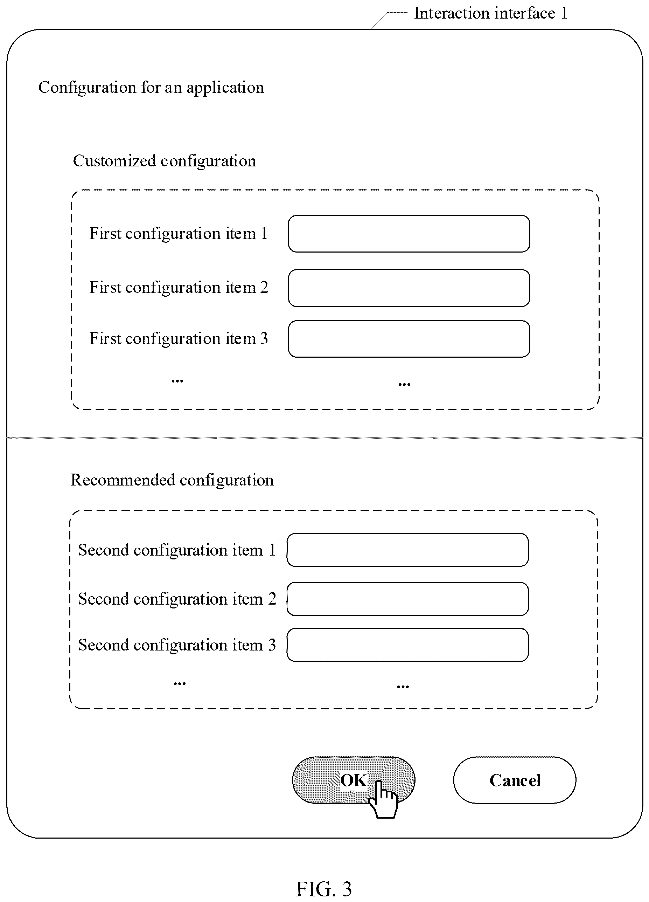

In a second implementation, the application orchestration module 301 may output the second configuration item, which may be specifically outputting the second configuration item to the client 100. This facilitates the client 100 in presenting the value of the second configuration item to the user. For example, the client 100 may present an interaction interface 1 shown in FIG. 3 to the user. The interaction interface 1 includes a customized configuration and a recommended configuration, where the customized configuration includes a plurality of first configuration items and values of the plurality of first configuration items, and the recommended configuration includes a plurality of second configuration items and values of the plurality of second configuration items. In this way, the user may manually confirm the values of the second configuration items in the recommended configuration. When the user confirms, on the client 100, that the values of the second configuration items are appropriate, the application orchestration module 301 deploys an application on the cloud based on the values configured for the first configuration items and the values automatically configured for the second configuration items. When the user determines that the values of the second configuration items are inappropriate, the user may modify the values of the second configuration items on the client 100 (during actual application, the user may modify values of a part of second configuration items in the plurality of second configuration items), so that the application orchestration module 301 may determine modified values corresponding to the part of second configuration items in response to a modification operation of the user on the values of the part of second configuration items, and deploy an application on the cloud based on the values configured for the first configuration items and the modified values configured for the second configuration items, that is, deploy the application on the cloud platform 200.

In this way, that the user confirms (and modifies) the values of the second configuration items can simplify an operation that needs to be performed by the user when deploying the application, improve configuration efficiency, and reduce configuration difficulty, and can also make a final configuration for the application meet an expectation of the user, to improve user experience of deploying the application.

In a third implementation, when the user provides values of some configuration items (namely, the first configuration items) based on the configuration template, the configuration module 302 may obtain a historical configuration record corresponding to the configuration template, for example, may obtain the historical configuration record from a database shown in FIG. 1. The historical configuration record includes a value configured for the second configuration item when an application is deployed in a historical time period. For example, the configuration module 302 may obtain configuration information that is for one or more applications and that is used by a plurality of users in a past one year by using the configuration template, where the configuration information includes a value of the second configuration item (and may further include a value of the first configuration item). In this way, the configuration module 302 provides the historical configuration record corresponding to the configuration template for the application orchestration module 301.

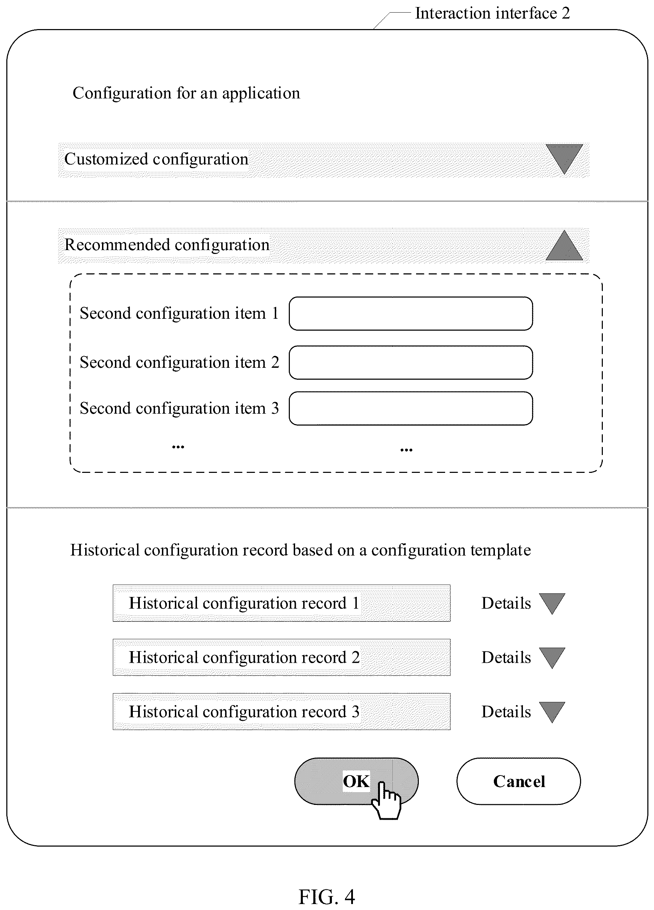

The application orchestration module 301 may present, to the user via the client 100, the value automatically configured by the configuration module 302 for the second configuration item, and also present the historical configuration record corresponding to the configuration template. As shown in FIG. 4, an interaction interface 2 presented by the client 100 may include a plurality of historical configuration records and a value currently configured by the application deployment apparatus 300 for the second configuration item. Further, the application orchestration module 301 may further present, on the interaction interface 2, a success rate of deploying an application by using each historical configuration record.

In this way, the user may refer to, based on the historical configuration record, a value (and a success rate that is of application deployment and that corresponds to the value) configured by another user for the second configuration item in the historical time period, and check whether a value currently automatically configured by the application deployment apparatus 300 for the second configuration item is appropriate. When the user confirms, on the client 100, that the value of the second configuration item is appropriate, the application orchestration module 301 deploys an application on the cloud based on the value configured for the first configuration item and the value automatically configured for the second configuration item. When the user determines that the value of the second configuration item is inappropriate, the user may modify the value of the second configuration item on the client 100. For example, the user may modify the value of the second configuration item on the interaction interface 2 with reference to a configuration of another user for the second configuration item in the historical time period, so that the application orchestration module 301 may deploy an application on the cloud based on the value configured for the first configuration item and a modified value configured for the second configuration item, that is, deploy the application on the cloud platform 200.

In this way, the historical configuration record for the second configuration item is presented to the user, to provide a reference for the user to configure an application, so that the user can make a decision by referring to a configuration situation of another user for the second configuration item, and set an appropriate value for the second configuration item. This can improve user experience of deploying the application.

It should be noted that the foregoing implementation of deploying the application on the cloud based on values of a plurality of configuration items is merely used as some examples for description. During actual application, the application orchestration module 301 may alternatively deploy the application in another manner. This is not limited herein.

Further, after completing application deployment, the application orchestration module 301 may further feed back an application deployment result to the user via the client 100, for example, feed back that the application is successfully deployed to the user, or feed back that the application fails to be deployed to the user, so that the user learns a deployment status of the application. In addition, the application orchestration module 301 (or the configuration module 302) may further generate a new historical configuration record based on the application deployment result generated based on the value of the second configuration item, and write the new historical configuration record into a database, for example, write the new historical configuration record into the database shown in FIG. 1, to provide a configuration reference for the user when the user deploys another application.

In the embodiment shown in FIG. 2, the application deployment apparatus 300 in the application deployment process may be software configured on a computing device or a computing device cluster. In addition, the software is run on the computing device or the computing device cluster, so that the computing device or the computing device cluster may implement a function of the foregoing application deployment apparatus 300. The following describes in detail the application deployment apparatus 300 in an application deployment process from a perspective of implementation of a hardware device.

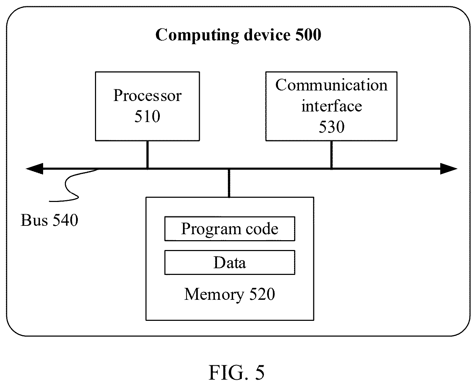

FIG. 5 is a diagram of a structure of a computing device. The foregoing application deployment apparatus 300 may be deployed on the computing device. The computing device may be a computing device (for example, a server) in a cloud environment, a computing device in an edge environment, or the like that may be specifically configured to implement a function of the application deployment apparatus 300 in the embodiment shown in FIG. 2.

As shown in FIG. 5, the computing device 500 includes a processor 510, a memory 520, a communication interface 530, and a bus 540. The processor 510, the memory 520, and the communication interface 530 communicate with each other through the bus 540. The bus 540 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for indicating the bus in FIG. 5, but this does not indicate that there is only one bus or only one type of bus. The communication interface 530 is configured to communicate with the outside, for example, receive a configuration template and deployment indication information that are provided by a user.

The processor 510 may be a central processing unit (central processing unit, CPU), an application-specific integrated circuit (application-specific integrated circuit, ASIC), a graphics processing unit (graphics processing unit, GPU), or one or more integrated circuits. The processor 510 may alternatively be an integrated circuit chip and has a signal processing capability. In an implementation process, a function of the application deployment apparatus 300 may be implemented by using a hardware integrated logic circuit in the processor 510, or by using instructions in a form of software. The processor 510 may alternatively be a general-purpose processor, a data signal processor (digital signal processor, DSP), a field programmable gate array (field programmable gate array, FPGA) or another programmable logic device, a discrete gate or a transistor logic device, or a discrete hardware component, and may implement or perform the methods, steps, and logical block diagrams disclosed in embodiments of this application. The general-purpose processor may be a microprocessor, or the processor may be any conventional processor, or the like. The method disclosed with reference to embodiments of this application may be directly performed and completed by a hardware decoding processor, or may be performed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 520. The processor 510 reads information in the memory 520, and completes some or all functions of the application deployment apparatus 300 in combination with hardware of the processor 510.

The memory 520 may include a volatile memory (volatile memory), for example, a random access memory (random access memory, RAM). The memory 520 may further include a non-volatile memory (non-volatile memory), for example, a read-only memory (read-only memory, ROM), a flash memory, an HDD, or an SSD.

The memory 520 stores executable code, and the processor 510 executes the executable code to perform the method performed by the application deployment apparatus 300.

Specifically, when the embodiment shown in FIG. 2 is implemented, and the application deployment apparatus 300 described in the embodiment shown in FIG. 2 is implemented by using software, software or program code required for executing a function of the application deployment apparatus 300 in FIG. 2 is stored in the memory 520. Interaction between the application deployment apparatus 300 and another device is implemented through the communication interface 530. The processor is configured to execute instructions in the memory 520, to implement the method performed by the application deployment apparatus 300.

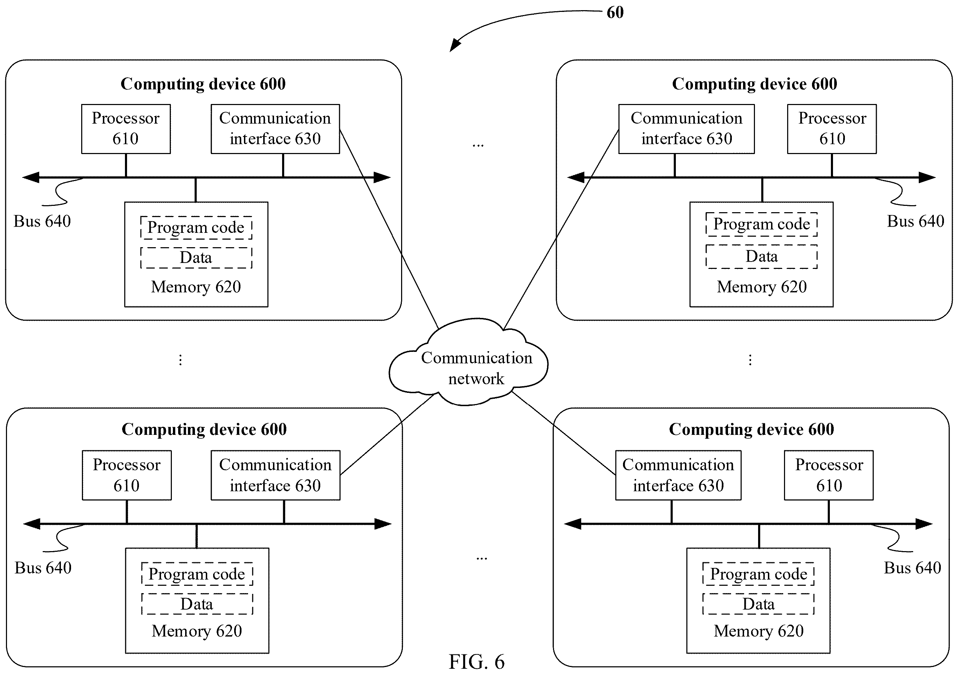

FIG. 6 is a diagram of a structure of a computing device cluster. A computing device cluster 60 shown in FIG. 6 includes a plurality of computing devices, and the foregoing application deployment apparatus 300 may be deployed on the plurality of computing devices in the computing device cluster 60 in a distributed manner. As shown in FIG. 6, the computing device cluster 60 includes the plurality of computing devices 600, and each computing device 600 includes a memory 620, a processor 610, a communication interface 630, and a bus 640. The memory 620, the processor 610, and the communication interface 630 are communicatively connected to each other through the bus 640.

The processor 610 may be a CPU, a GPU, an ASIC, or one or more integrated circuits. The processor 610 may alternatively be an integrated circuit chip and has a signal processing capability. In an implementation process, some functions of the application deployment apparatus 300 may be implemented by using a hardware integrated logic circuit in the processor 610, or by using instructions in a form of software. The processor 610 may alternatively be a DSP, an FPGA, a general-purpose processor, another programmable logic device, a discrete gate or a transistor logic device, or a discrete hardware component, and may implement or perform some of the methods, steps, and logical block diagrams disclosed in embodiments of this application. The general-purpose processor may be a microprocessor, or the processor may be any conventional processor, or the like. Steps of the method disclosed with reference to embodiments of this application may be directly performed and completed by a hardware decoding processor, or may be performed and completed by using a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 620. In each computing device 600, the processor 610 reads information in the memory 620, and may complete some functions of the application deployment apparatus 300 in combination with hardware of the processor 610.

The memory 620 may include a ROM, a RAM, a static storage device, a dynamic storage device, a hard disk (for example, an SSD or an HDD), and the like. The memory 620 may store program code, for example, some or all program code for implementing an application orchestration module 301, some or all program code for implementing a configuration module 302, and some or all program code for implementing a cloud environment feedback module 303. For each computing device 600, when the program code stored in the memory 620 is executed by the processor 610, the processor 610 performs, based on the communication interface 630, some methods performed by the application deployment apparatus 300. For example, some computing devices 600 may be configured to perform the methods performed by the application orchestration module 301, and the other computing devices 600 are configured to perform the methods performed by the configuration module 302 and the cloud environment feedback module 303. The memory 620 may further store data, for example, intermediate data or result data generated by the processor 610 in an execution process, for example, a plurality of candidate values of the foregoing second configuration item, a score corresponding to each candidate value, and a value of the second configuration item.

The communication interface 603 in each computing device 600 is configured to communicate with the outside, for example, interact with another computing device 600.

The bus 640 may be a peripheral component interconnect bus, an extended industry standard architecture bus, or the like. For ease of representation, only one thick line is for indicating the bus 640 in each computing device 600 in FIG. 6, but this does not indicate that there is only one bus or only one type of bus.

A communication path is established between the plurality of computing devices 600 through a communication network, to implement the function of the application deployment apparatus 300. Any one of the computing devices may be a computing device (for example, a server) in a cloud environment or a computing device in an edge environment.

In addition, an embodiment of this application further provides a computer-readable storage medium. The computer-readable storage medium stores instructions. When the instructions are run on one or more computing devices, the one or more computing devices are enabled to perform the method performed by the application deployment apparatus 300 in the foregoing embodiments.

In addition, an embodiment of this application further provides a computer program product. When the computer program product is executed by one or more computing devices, the one or more computing devices perform any one of methods in the foregoing application deployment method. The computer program product may be a software installation package. When any one of the methods in the foregoing application deployment method needs to be used, the computer program product may be downloaded, and executed on a computer.

It should be further noted that, the foregoing described embodiments are merely examples. The units described as separate parts may or may not be physically separate and the parts displayed as units may or may not be physical units, may be located in one position or may be distributed on a plurality of network units. Some or all the modules may be selected according to actual requirements to achieve the objectives of the solutions of embodiments. In addition, in the accompanying drawings of the embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, any functions that can be performed by a computer program can be easily implemented by using corresponding hardware. Moreover, a specific hardware structure for achieving a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1. An application deployment method, wherein the method comprises:
obtaining a configuration template provided by a user, wherein the configuration template comprises a plurality of configuration items for the application, the plurality of configuration items comprise a first configuration item and a second configuration item, a value of the first configuration item is configured by the user, and the plurality of configuration items are used to configure a resource that is in a cloud environment and that is required for deploying the application;
obtaining at least one available resource that matches the second configuration item and that is in the cloud environment, wherein the available resource comprises at least one of a computing resource, a storage resource, and a network resource;
determining a value of the second configuration item based on the at least one available resource, wherein the value of the second configuration item indicates a target resource in the at least one available resource; and
deploying the application on a cloud based on the first configuration item, the value of the first configuration item, the second configuration item, and the value of the second configuration item.

2. The method according to claim 1, wherein the method further comprises:
obtaining deployment indication information, wherein the deployment indication information indicates to select an available resource from the cloud environment for the second configuration item based on a target factor, and the target factor comprises one or more factors in a function, performance, and costs of the application; and
determining the value of the second configuration item based on the at least one available resource comprises:
determining the value of the second configuration item based on the deployment indication information and the at least one available resource.

3. The method according to claim 1 or 2, wherein determining the value of the second configuration item based on the at least one available resource comprises:
obtaining scores respectively corresponding to a plurality of candidate values of the second configuration item, wherein each of the plurality of candidate values indicates an available resource in the cloud environment; and
determining the value of the second configuration item based on the scores respectively corresponding to the plurality of candidate values.

4. The method according to claim 3, wherein there are a plurality of second configuration items, and each second configuration item corresponds to at least one candidate value; and
determining the value of the second configuration item based on the scores respectively corresponding to the plurality of candidate values comprises:
determining a plurality of configuration combinations, wherein each of the plurality of configuration combinations comprises the plurality of second configuration items and one candidate value corresponding to each of the plurality of second configuration items, and candidate values respectively corresponding to the plurality of second configuration items vary in different configuration combinations;
determining a score of each of the plurality of configuration combinations, wherein the score of each configuration combination is obtained through calculation based on scores of candidate values respectively corresponding to the plurality of second configuration items; and
determining a target configuration combination from the plurality of configuration combinations based on the score of each configuration combination, wherein candidate values in the target configuration combination are values of the plurality of second configuration items.

5. The method according to claim 3, wherein the plurality of candidate values comprise a target candidate value, a score of the target candidate value is a sum value of a basic score and a preference score, and the preference score is determined based on a preference level of the target candidate value; and
the method further comprises:
in response to an adjustment operation on the preference level of the target candidate value, adjusting the score of the target candidate value.

6. The method according to any one of claims 1 to 5, wherein deploying the application on the cloud based on the first configuration item, the value of the first configuration item, the second configuration item, and the value of the second configuration item comprises:
outputting the value that is of the second configuration item and that is for presentation to the user;
in response to a modification operation of the user on the value of the second configuration item, determining a modified value corresponding to the second configuration item; and
deploying the application on the cloud based on the first configuration item, the value of the first configuration item, the second configuration item, and the modified value corresponding to the second configuration item.

7. The method according to any one of claims 1 to 5, wherein deploying the application on the cloud based on the first configuration item, the value of the first configuration item, the second configuration item, and the value of the second configuration item comprises:
outputting the value that is of the second configuration item and that is for presentation to the user, and a historical configuration record corresponding to the configuration template, wherein the historical configuration record comprises a value configured for the second configuration item when an application is deployed in a historical time period; and
in response to a selection operation of the user on the value of the second configuration item, deploying the application on the cloud based on the first configuration item, the value of the first configuration item, the second configuration item, and the value of the second configuration item.

8. An application deployment apparatus, wherein the apparatus comprises:
an application orchestration module, configured to obtain a configuration template provided by a user, wherein the configuration template comprises a plurality of configuration items for the application, the plurality of configuration items comprise a first configuration item and a second configuration item, a value of the first configuration item is configured by the user, and the plurality of configuration items are used to configure a resource that is in a cloud environment and that is required for deploying the application;
a cloud environment feedback module, configured to obtain at least one available resource that matches the second configuration item and that is in the cloud environment, wherein the available resource comprises at least one of a computing resource, a storage resource, and a network resource; and
a configuration module, configured to determine a value of the second configuration item based on the at least one available resource, wherein the value of the second configuration item indicates a target resource in the at least one available resource, wherein
the application orchestration module is further configured to deploy the application on a cloud based on the first configuration item, the value of the first configuration item, the second configuration item, and the value of the second configuration item.

9. The apparatus according to claim 8, wherein the application orchestration module is further configured to obtain deployment indication information, wherein the deployment indication information indicates to select an available resource from the cloud environment for the second configuration item based on a target factor, and the target factor comprises one or more factors in a function, performance, and costs of the application; and
the configuration module is specifically configured to determine the value of the second configuration item based on the deployment indication information and the at least one available resource.

10. The apparatus according to claim 8 or 9, wherein the configuration module is specifically configured to:
obtain scores respectively corresponding to a plurality of candidate values of the second configuration item, wherein each of the plurality of candidate values indicates an available resource in the cloud environment; and
determine the value of the second configuration item based on the scores respectively corresponding to the plurality of candidate values.

11. The apparatus according to claim 10, wherein there are a plurality of second configuration items, each second configuration item corresponds to at least one candidate value, and the configuration module is specifically configured to:
determine a plurality of configuration combinations, wherein each of the plurality of configuration combinations comprises the plurality of second configuration items and one candidate value corresponding to each of the plurality of second configuration items, and candidate values respectively corresponding to the plurality of second configuration items vary in different configuration combinations;
determine a score of each of the plurality of configuration combinations, wherein the score of each configuration combination is obtained through calculation based on scores of candidate values respectively corresponding to the plurality of second configuration items; and
determine a target configuration combination from the plurality of configuration combinations based on the score of each configuration combination, wherein candidate values in the target configuration combination are values of the plurality of second configuration items.

12. The apparatus according to claim 10, wherein the plurality of candidate values comprise a target candidate value, a score of the target candidate value is a sum value of a basic score and a preference score, and the preference score is determined based on a preference level of the target candidate value; and
the configuration module is further configured to: in response to an adjustment operation on the preference level of the target candidate value, adjust the score of the target candidate value.

13. The apparatus according to any one of claims 8 to 12, wherein the application orchestration module is specifically configured to:
output the value that is of the second configuration item and that is for presentation to the user;
in response to a modification operation of the user on the value of the second configuration item, determine a modified value corresponding to the second configuration item; and
deploy the application on the cloud based on the first configuration item, the value of the first configuration item, the second configuration item, and the modified value corresponding to the second configuration item.

14. The apparatus according to any one of claims 8 to 12, wherein the application orchestration module is specifically configured to:
output the value that is of the second configuration item and that is for presentation to the user, and a historical configuration record corresponding to the configuration template, wherein the historical configuration record comprises a value configured for the second configuration item when an application is deployed in a historical time period; and
in response to a selection operation of the user on the value of the second configuration item, deploy the application on the cloud based on the first configuration item, the value of the first configuration item, the second configuration item, and the value of the second configuration item.

15. A computing device cluster, comprising at least one computing device, wherein each computing device comprises a processor and a memory; and
the processor is configured to execute instructions stored in the memory, so that the computing device cluster performs the method according to any one of claims 1 to 7.

16. A computer-readable storage medium, wherein the computer-readable storage medium stores instructions, and when the instructions are run on at least one computing device, the at least one computing device is enabled to perform the method according to any one of claims 1 to 7.
